# EUROPÄISCHE PATENTSCHRIFT

(11) **EP 1 547 763 B1**
(45) Veröffentlichungstag und Bekanntmachung des Hinweises auf die Patenterteilung: **16.03.2011**
(21) Anmeldenummer: 03029547.1
(22) Anmeldetag: 22.12.2003
(51) Int. Cl.: B32B 23/16, C08K 3/30

(54) **Leitfähiger Holzwerkstoffbauteil sowie Verfahren zu dessen Herstellung**
Conductive wooden material and process for its production
Matériaux en bois électroconducteur et procédé de préparation

(43) Veröffentlichungstag der Anmeldung: 29.06.2005
(73) Patentinhaber: Fritz Egger GmbH & Co. OG, 3105 Unterradlberg (AT)
(72) Erfinder: Himmelreich Michael, 33102 Paderborn (DE)
(74) Vertreter: Rox, Thomas

(56) Entgegenhaltungen:
- EP-A- 0 014 397
- EP-A- 0 141 315
- GB-A- 1 346 960
- US-A- 3 507 678
- US-A- 4 132 655

## Beschreibung

Die Erfindung betrifft einen leitfähigen Holzwerkstoffbauteil sowie ein Verfahren zu dessen Herstellung. Der Holzwerkstoffartikel weist einen geringeren elektrischen Widerstand als bisher bekannte Holzwerkstoffbauteil auf. Die Erfindung betrifft also vorzugsweise die Zusammensetzung des Holzwerkstoffbauteils.

Holzwerkstoffbauteile der zuvor genannte Art sind in vielfältiger Form bekannt. Zum einen können die Holzwerkstoffbauteile Platten sein, die im Bauwesen insbesondere zur Innenraumgestaltung verwendet werden. Es sind darüber hinaus auch Formteile bekannt, die für den Fahrzeuginnenausbau oder für Möbelteile verwendet werden.

Im Stand der Technik gibt es Holzwerkstoffbauteile bzw. Holzwerkstoffplatten aus unterschiedlichen Holzwerkstoffen. Insbesondere sind dieses Faserplatten (mitteldichte Faserplatte (MDF), hochdichte Faserplatte (HDF)), Spanplatten und OSB-Platten (oriented strand board).

Diesen Holzwerkstoffen ist gemein, dass lignozellulosem Material in unterschiedlicher Zerkleinerungsform ein Bindemittel und vorzugsweise andere Additive wie beispielsweise Härter, Hydrophobierungsmittel, Farbe und Pilzschutzmittel zugemischt werden. Die Trocknung des lignozellulosen Materials kann je nach herzustellendem Produkt und der eingesetzten Technologie vor dem Zumischen des Bindemittels und der Additive oder im Anschluss daran erfolgen.

Beim sogenannten Trockenverfahren wird nach dem Trocknen und Mischen eine Matte geformt, die dann unter Einwirkung von Druck und Temperatur zu einem stabilen, mechanisch festen Holzwerkstoffbauteil bzw. Holzwerkstoffplatte verfestigt wird. Wesentlich ist, dass die Feuchtigkeit der Mischung vor dem Zuführen zur Presse unterhalb von 20 Gew.-%, bezogen auf die Trockenmasse, liegt, bevorzugt unterhalb von 15 Gew.-%.

Die elektrische Leitfähigkeit von Holzwerkstoffbauteilen, insbesondere von Spanplatten, MDF- bzw. HDF-Platten und OSB-Platten stellt für manche Einsatzzwecke und Veredelungsverfahren eine bedeutende Eigenschaft dar. So ist die elektrische Leitfähigkeit relevant bei Anwendung der Pulverbeschichtungstechnologie für Holzwerkstoffe oder auch zur Vermeidung der elektrostatischen Aufladung im Fußbodenbereich. In beiden Fällen ist es jedoch problematisch, die Leitfähigkeit der Platte zu erhöhen.

Eine Anpassung der Leitfähigkeit von Plattenmaterial wie Gipsplatten, Gipskartonplatten, zementgebundenen Platten oder MDF-Platten beschreibt die DE 102 06 593 A1. Hier wird vorgeschlagen die Oberfläche solcher Platten mit einer elektrisch leitfähigen Beschichtung zu versehen. Dieses Verfahren ist aufwändig, da es z.B. vor der Pulverbeschichtung einen zusätzlichen Arbeitsgang erfordert. Die Vorteile der Pulverbeschichtung wie verringerte Durchlaufzeit und Ersparnis einer Zwischenbehandlung der Oberfläche durch Schleifen mit der daraus resultierenden, wesentlichen Kostenersparnis, werden so zu Nichte gemacht.

Aus dem Stand der Technik ist weiterhin das Einbringen von Kohlestaub zur Erhöhung der Leitfähigkeit von Spanplatten bekannt, wie dies beispielsweise für sogenannte Computerböden erwünscht ist. Hier wird Kohlestaub in Pulverform im Zuge des Herstellungsprozesses, vor allem in der Mittellage der Spanplatte zugemischt. Nachteilig bei diesem Verfahren ist die dunkel gefärbte Mittellage, die schwer zu erreichende, homogene Verteilung des feinen Kohlepulvers im Spanmaterial der Mittellage und der deutlich zu erhöhende Leimanteil, um die geforderten mechanisch-technologischen Eigenschaften zu erzielen. Zudem ist diese Technologie für die Herstellung von MDF-Platten nicht anwendbar, da verfahrensbedingt eine Lösung und nicht ein Pulver eingesetzt werden müsste.

Weitere lösliche Hilfsstoffe für die Verbesserung der elektrischen Leitfähigkeit weisen keine chemisch neutralen Eigenschaften auf oder diese sind entweder wegen deren Umwelttoxizität und/oder deren leichter Entflammbarkeit sowie wegen deren kostenintensiver Darstellung nur unter besonderen Vorkehrungen und dann auch nur sehr unwirtschaftlich einsetzbar.

Eine Möglichkeit zur Verringerung der statischen Aufladung eines Laminatfußbodens beschreibt die DE 101 15 567 Cl. Hier wird zwischen der Oberflächenbeschichtung und der Trägerplatte eine leitfähige Zwischenschicht aufgebracht, um die Aufladung des Laminatfußbodens im Zuge des Gebrauchs zu verringern.

US 4 132 655 A beschreibt eine feuerhemmende Zusammensetzung für Cellulose enthaltenes Material, das ein Gemisch enthält, welches als Hauptbestandteil ein Reaktionsprodukt von Schwefelsäure und einem Borsäureestererz enthält. Dieses Reaktionsprodukt kann Borsäure und Kaliumsulfat enthalten. Die feuerhemmende Zusammensetzung kann beispielsweise in Dachböden oder Zwischenwände gespritzt werden.

EP 0 014 397 A1 beschreibt die Verwendung von Zusatzmitteln wie beispielsweise Borsäuresalzen, Essigsäuresalzen, Zinksulfat/Kupfersulfat bei der Herstellung von Werkstoffen, wie Holzspanplatten. Als Borsäure-/Essigsäuresalze können auch Kaliumsalze verwendet werden.

EP 0 141 315 A1 beschreibt ein Verfahren zur Herstellung von Spanplatten mit verbesserter elektrischer Leitfähigkeit, wobei man bei der Herstellung der Spanplatten 0,3 bis 5 Gew.-%, bezogen auf trockenes Holz, eines Farbrußes zusetzt.

US-A 3 507 678 beschreibt ein Verfahren für die Herstellung eines fotografischen lichtempfindlichen Materials unter Verwendung von nichthygroskopischen kristallinen wasserlöslichen Salzen.

Die europäische Norm EN 1081 "Bestimmung des elektrischen Widerstandes" beschreibt Prüfmethoden für 3 verschiedene Widerstandsarten, wobei für den Einsatz von Holzwerkstoffen sowohl der Durchgangswiderstand (Widerstand senkrecht zur Plattenebene durch den Werkstoff hindurch) als auch der Oberflächenwiderstand (elektrische Leitfähigkeit in den oberen Schichten des Werkstoffes horizontal zur Werkstoffoberfläche) maßgeblich sind. Das ist insofern von Relevanz, da je nach eingesetzter Technologie zur Verringerung des elektrischen Widerstandes unterschiedliche Auswirkungen auf die elektrische Leitfähigkeit erzielt werden. So ist es verständlich, dass eine nur oberflächlich aufgebrachte leitfähige Beschichtung den Oberflächenwiderstand stark beeinflusst, den Durchgangswiderstand aber nur in geringem Ausmaß.

Natives Holz weist im darrtrockenen, also im absolut trockenen Zustand einen elektrischen Widerstand von etwa 10^14 Ohm auf, herkömmliche MDF-Platten einen von etwa 10^13 Ohm. Die nachfolgende Tabelle 1 gibt weitere Messwerte für MDF-Platten verschiedener Stärke und Dichte an.

**Tabelle 1: Oberflächenwiderstand und Durchgangswiderstand nach EN 1081 von verschiedenen MDF-Platten und HDF-Platten nach Klimatisierung bei 50% relativer Luftfeuchtigkeit und 23°C ohne Verwendung von Additiven zur Verringerung der elektrischen Leitfähigkeit:**

| Probenbezeichnung | Dicke in mm | Dichte in kg/m³ | Oberflächenwiderstand in 10^9 Ohm | Durchgangswiderstand in 10^9 Ohm |
|---|---|---|---|---|
| MDF 1 | 19 | 690 | 1080 | 520 |
| MDF 2 | 19 | 730 | 1030 | 490 |
| MDF 3 | 12 | 720 | 1110 | 560 |
| MDF 4 | 7,4 | 800 | 1120 | 530 |
| MDF 5 | 25 | 680 | 1100 | 550 |

Der Erfindung liegt daher das technische Problem zugrunde, einen Holzwerkstoff mit einem geringeren elektrischen Widerstand anzugeben. Insbesondere liegt der Erfindung das technische Problem zugrunde, sowohl den Durchgangswiderstand als auch den Oberflächenwiderstand zu verringern, um mit einer Technologie ein breites Einsatzspektrum zu erreichen.

Das zuvor aufgezeigte technische Problem wird erfindungsgemäß durch eine Holzwerkstoffbauteil nach Anspruch 1 und durch ein Herstellungsverfahren nach Anspruch 5 gelöst. Weitere Ausgestaltungen der Erfindung sind in den Unteransprüchen angegeben.

Erfindungsgemäß ist erkannt worden, dass ein Anteil an Kaliumsulfat im Zuge der Herstellung der Mischung bestehend aus Bindemittel, lignozellulosem Material und vorzugsweise anderen Additiven, zugemischt wird. Somit entsteht ein Kaliumsulfat-haltiger Holzwerkstoffbauteil mit vergrößerter elektrischer Leitfähigkeit.

Überraschender Weise wurde festgestellt, dass verglichen mit anderen, die Leitfähigkeit verbessernden Stoffen bei der Anwendung von Kaliumsulfat eine wesentlich erhöhte Wirksamkeit erreicht wird. Zudem zeigt sich ein chemisch neutrales Verhalten in Kombination mit den üblich eingesetzten Bindemitteln.

Bevorzugte Anteile von Kaliumsulfat bezogen auf den Trockenmassenanteil des lignozellulosen Materials sind 0,5 Gew.-% und bis 15 Gew.-%, bevorzugt 1,5 bis 5 Gew.-%.

Ein Vorteil der Zugabe von Kaliumsulfat besteht darin, dass dieses Additiv im Herstellungsprozess gut in das Material eingearbeitet werden kann. In bevorzugter Weise wird das Kaliumsulfat in gelöster Form hinzugefügt.

Die Zugabe von Kaliumsulfat ist frei von umweltrelevanten Bestandteilen, wie Chloriden oder organischen Lösungsmitteln, und die mechanisch-technologischen Eigenschaften des damit hergestellten Bauteils bzw. Plattenmaterials wie Quellung, Querzugfestigkeit, Biegefestigkeit und Abhebefestigkeit werden nicht negativ beeinflusst.

Für die Verarbeitung ist weiterhin vorteilhaft, dass das Kaliumsulfat bis 250°C temperaturstabil ist und dass es keine korrosiven Eigenschaften aufweist. Hinzu kommt der wirtschaftliche Vorteil, dass die Herstellkosten nur in einem Ausmaß von maximal 10 bis 20% erhöht werden. Die höheren Herstellkosten resultieren aus der höheren Dichte des Plattenmaterials, einer verlängerten Presszeit, den Kosten für das Kaliumsulfat und einem etwas erhöhten Bindemitteleinsatz.

Es gibt verschiedene Möglichkeiten, das Kaliumsulfat während des Herstellungsverfahrens dem Gemisch aus zellulosehaltigem Material und Bindemittel beizufügen. Das Kaliumsulfat kann in einem separaten Schritt vor oder nach der Bindemittelzugabe dem Zellulosematerial zugefügt werden. Ebenso kann das Kaliumsulfat gleichzeitig mit der Beleimung des lignozellulosen Materials beigemischt werden. Je nach den gewünschten Eigenschaften des Holzwerkstoffbauteils kann der Zeitpunkt der Zugabe frei gewählt werden.

Die nachfolgenden Beispiele zeigen den erzielten Effekt hinsichtlich der Verringerung des elektrischen Widerstandes.

### Beispiel 1:

Das Beispiel 1 beschreibt die Herstellung einer erfindungsgemäßen MDF-Platte.

Aus Kaliumsulfat wurde eine 10%-ige wässrige Lösung hergestellt, welche dann in der Blowline gemeinsam mit dem Bindemittel und anderen Additiven den Fasern zugemischt worden ist. Das Mischungsverhältnis war wie folgt (Angaben in Gewichtsteilen):

| | |
|---|---|
| 100,0 Teile | Fasern, |
| 12,0 Teile | Harnstoff-Formaldehydharz als Festharz berechnet, |
| 1,2 Teile | Wachs zur Hydrophobierung als Festwachs berechnet und |
| 2,5 Teile | Kaliumsulfat als Feststoff berechnet. |

Die so erhaltene Mischung wurde auf einen Feuchtigkeitsgehalt von etwa 12% getrocknet und nach der Mattenformung zu einer festen Platte gepresst. Die Eigenschaften im Vergleich zu einer konventionellen, ohne Kaliumsulfat hergestellten Platte, waren wie folgt (Mittelwert aus 10 Einzelprüfwerten), siehe Tabelle 2:

**Tabelle 2:**

| **Eigenschaft** | **Einheit** | **Platte mit Kaliumsulfat** | **Referenzplatte** |
|---|---|---|---|
| Dichte | kg/m³ | 800 | 780 |
| Stärke | mm | 19 | 19 |
| Biegefestigkeit | N/mm² | 34 | 35 |
| Querzugfestigkeit | N/mm² | 1,10 | 1,03 |
| Abhebefestigkeit | N/mm² | 1,37 | 1,40 |
| Feuchtigkeit | % | 6 | 6 |
| Herstellkostenindex | --- | 105 | 100 |
| Oberflächenwiderstand | 10^9 Ohm | 75 | 1010 |
| Durchgangswiderstand | 10^9 Ohm | 40 | 570 |

### Beispiel 2:

Beschrieben wird die Herstellung einer erfindungsgemäßen Holzwerkstoffplatte, die durch Pulverbeschichtung weiter veredelt wird.

Aus nachstehend definierter Mischung wurde gemäß Beispiel 1 eine Platte hergestellt (Angaben in Gewichtsteilen).

| | |
|---|---|
| 100,0 Teile | Fasern, |
| 14,0 Teile | Melamin-Harnstoff-Formaldehydharz als Festharz berechnet, |
| 1,2 Teile | Wachs zur Hydrophobierung als Festwachs berechnet und |
| 2,5 Teile | Kaliumsulfat als Feststoff berechnet. |

Die Eigenschaften im Vergleich zu einer konventionellen, ohne Kaliumsulfat, nach Beispiel 1 hergestellten Platte, waren wie folgt (Mittelwert aus 10 Einzelprüfwerten), siehe Tabelle 3:

**Tabelle 3:**

| **Eigenschaft** | **Einheit** | **Platte mit Kaliumsulfat** | **Referenzplatte** |
|---|---|---|---|
| Dichte | kg/m³ | 840 | 760 |
| Stärke | mm | 19 | 19 |
| Biegefestigkeit | N/mm² | 40 | 32 |
| Querzugfestigkeit | N/mm² | 1,32 | 0,98 |
| Abhebefestigkeit | N/mm² | 1,61 | 1,32 |
| Feuchtigkeit | % | 6 | 6 |
| Herstellkostenindex | --- | 110 | 100 |
| Oberflächenwiderstand | 10^9 Ohm | 63 | 990 |
| Durchgangswiderstand | 10^9 Ohm | 33 | 525 |

Die so erhaltenen Platten mit Kaliumsulfat zeigten eine sehr gute Verarbeitbarkeit bei der Pulverbeschichtung, im besonderen wurde keine Neigung zur Rissbildung im Kantenbereich und eine hohe Regelmäßigkeit der Beschichtung festgestellt. Die Abweichungen zwischen den Referenzplatten aus Beispiel 1 und 2 können auf normale, durch den Prozess bedingte Schwankungen zurückgeführt werden. Der gegenüber Beispiel 1 erhöhte Herstellkostenindex ist einerseits auf den höheren Kaliumsulfatanteil und andererseits auf die Art und den Anteil des Bindemittels zurückzuführen.

### Beispiel 3:

Anhand von Beispiel 3 soll der Einsatz der leitfähigen Platte als Trägermaterial für einen Laminatfboden verdeutlicht werden.

Es wurde zunächst aus nachstehender Mischung eine HDF-Platte, wie in Beispiel 1 beschrieben, hergestellt.

| | |
|---|---|
| 100,0 Teile | Fasern, |
| 16,0 Teile | Melamin-Harnstoff-Formaldehydharz als Festharz berechnet, |
| 1,2 Teile | Wachs zur Hydrophobierung als Festwachs berechnet und |
| 4,5 Teile | Kaliumsulfat als Feststoff berechnet. |

Die erhaltenen Platten wurden nach einer Reifezeit von einer Woche mit einer für Laminatfußböden geeigneten Beschichtung verpresst und nach der in EN 1081 definierten Vorklimatisierung hinsichtlich des elektrischen Widerstandes geprüft.

Tabelle 4 zeigt die Eigenschaften der so erhaltenen Platte gegenüber einer herkömmlichen Laminatfbodenplatte. (Mittelwert aus 10 Einzelprüfwerten):

**Tabelle 4:**

| **Eigenschaft** | **Einheit** | **Laminatfuß- bodenplatte mit Kaliumsulfat** | **Laminatfuß- bodenplatte ohne Kaliumsulfat** |
|---|---|---|---|
| Dichte | kg/m³ | 815 | 800 |
| Stärke | mm | 7,4 | 7,4 |
| Biegefestigkeit | N/mm² | 38 | 36 |
| Querzugfestigkeit | N/mm² | 1,22 | 1,13 |
| Abhebefestigkeit | N/mm² | 1,49 | 1,29 |
| Feuchtigkeit | % | 5,8 | 5,9 |
| Herstellkostenindex | --- | 115 | 100 |
| Oberflächenwiderstand | 10^9 Ohm | 0,93 | 1135 |

## Patentansprüche

1. Holzwerkstoffbauteil,
- mit einem Anteil an lignozellulosem Material und
- mit einem Anteil an Bindemittel,
- mit einem Anteil an Kaliumsulfat,
**dadurch gekennzeichnet,**
**dass** der Oberflächenwiderstand kleiner als 200x10^9 Ohm, vorzugsweise kleiner als 20x10^9 Ohm, insbesondere kleiner als 2x10^9 Ohm ist.

2. Holzwerkstoffbauteil nach Anspruch 1,
**dadurch gekennzeichnet,**
**dass** der Anteil an Kaliumsulfat bezogen auf den Trockenmassenanteil des lignozellulosen Materials 0,5 Gew.-% und bis 15 Gew.-%, bevorzugt 1,5 bis 5 Gew.-% beträgt.

3. Holzwerkstoffbauteil nach Anspruch 1 oder 2,
**dadurch gekennzeichnet,**
**dass** das lignozellulose Material aus Holzfasern oder aus Holzspänen besteht.

4. Holzwerkstoffbauteil nach einem der Ansprüche 1 bis 3,
**dadurch gekennzeichnet,**
**dass** mindestens eine Oberfläche mit einem Pulverbeschichtungsverfahren beschichtet ist.

5. Holzwerkstoffbauteil nach einem der Ansprüche 1 bis 4,
**dadurch gekennzeichnet,**
**dass** der Durchgangswiderstand kleiner als 100x10^9 Ohm, vorzugsweise kleiner als 10x10^9 Ohm ist.

6. Laminatfußbodenpaneel,
- mit einer Trägerplatte,
- mit einer oberen Deckschicht und
- mit einer Gegenzugschicht,
**dadurch gekennzeichnet,**
- **dass** die Trägerplatte aus einem Holwerkstoffbauteil nach einem der Ansprüche 1 bis 5 besteht.

7. Verfahren zur Herstellung eines Holzwerkstoffbauteils, nach einem der Ansprüche 1 bis 4,
- bei dem ein Anteil von zellulosem Material hergestellt wird,
- bei dem ein Anteil Bindemittel dem zellulosen Material zugegeben wird und
- bei dem unter Anwendung von Druck und Wärme das Gemisch aus zellulosem Material und Bindemittel verpresst wird, **dadurch gekennzeichnet,**
- **dass** dem Gemisch vor dem Verpressen ein Anteil von Kaliumsulfat zugegeben wird.

8. Verfahren nach Anspruch 7,
bei dem das Kaliumsulfat dem Gemisch in Form einer, vorzugsweise wässrigen Lösung zugegeben wird.

9. Verfahren nach Anspruch 7 oder 8,
bei dem das Kaliumsulfat vor, gleichzeitig mit oder nach der Beleimung des lignozellulosen Materials zugegeben wird.

10. Verfahren nach einem der Ansprüche 7 bis 9,
bei dem das Kaliumsulfat mit einem Anteil von 0,5 bis 15 Gew.-%, vorzugsweise 1,5 bis 5 Gew.-% bezogen auf die Trockenmasse des zellulosehaltigen Materials beigemischt wird.

11. Verfahren nach einem der Ansprüche 7 bis 10,
bei dem nach dem Verpressen die Oberfläche des Holzwerkstoffbauteils durch ein Pulverbeschichtungsverfahren beschichtet wird.

12. Verfahren nach einem der Ansprüche 7 bis 11,
bei dem als Holzwerkstoffbauteil eine Holzwerkstoffplatte, insbesondere eine MDF- oder HDF-Platte, eine Spanplatte oder eine OSB-Platte hergestellt wird.

## Claims

1. Wood-based material component,
- having a proportion of lignocellulosic material and
- having a proportion of binding agent,
- having a proportion of potassium sulphate,
**characterised in that** the surface resistance is less than 200x10^9 ohms, preferably less than 20x10^9 ohms, particularly less than 2x10^9 ohms.

2. Wood-based material component according to Claim 1, **characterised in that** the proportion of potassium sulphate is 0.5 %wt. and up to 15% wt., preferably 1.5 %wt. to 5 %wt., in relation to the dry mass proportion of lignocellulosic material.

3. Wood-based material component according to Claim 1 or 2, **characterised in that** the lignocellulosic material consists of wood fibres or of wood chips.

4. Wood-based material component according to any one of Claims 1 to 3, **characterised in that** at least one surface is coated using a powder coating process.

5. Wood-based material component according to any one of Claims 1 to 4, **characterised in that** the volume resistance is less than 100x10^9 ohms, preferably less than 10x10^9 ohms.

6. Laminate floor panel,
- having a carrier board,
- having an upper surface layer and
- having a backing layer,
**characterised in that**
- the carrier board consists of a wood-based material component according to any one of Claims 1 to 5.

7. Method for producing a wood-based material component according to any one of Claims 1 to 4,
- in which a proportion of cellulosic material is produced,
- in which a proportion of binding agent is added to the cellulosic material and
- in which the mixture consisting of cellulosic material and binding agent is pressed together by applying heat and pressure,
**characterised in that**
- a proportion of potassium sulphate is added to the mixture before pressing.

8. Method according to Claim 7, in which the potassium sulphate is added to the mixture in the form of a preferably aqueous solution.

9. Method according to Claim 7 or 8, in which the potassium sulphate is added before, at the same time as or after gluing the lignocellulosic material.

10. Method according to any one of Claims 7 to 9, in which the potassium sulphate is admixed having a proportion of 0.5 %wt. to 15% wt., preferably 1.5 %wt. to 5 %wt., in relation to the dry mass of the cellulose-containing material.

11. Method according to any one of Claims 7 to 10, in which, the surface of the wood-based material component after pressing is coated by means of a powder coating process.

12. Method according to any one of Claims 7 to 11, in which a wood-based material board, in particular an MDF or HDF board, a chipboard or an OSB board is produced as the wood-based material component.

## Revendications

1. Elément en matériau dérivé du bois, qui comprend
- une portion de matériau lignocellulosique, et
- une portion de liant,
- une portion de sulfate de potassium,
**caractérisé en ce que**
la résistance de surface est inférieure à 200 x 10^9 Ohm, de préférence inférieure à 20 x 10^9 Ohm, en particulier inférieure à 2 x 10^9 Ohm.

2. Elément en matériau dérivé du bois selon la revendication 1, **caractérisé en ce que** la proportion de sulfate de potassium par rapport à la matière sèche du matériau lignocellulosique est de 0,5 % en poids et jusqu'à 15 % en poids, de préférence de 1,5 à 5 % en poids.

3. Elément en matériau dérivé du bois selon revendication 1 ou 2, **caractérisé en ce que** le matériau lignocellulosique consiste en fibres de bois et en copeaux de bois.

4. Elément en matériau dérivé du bois selon l'une des revendications 1 à 3, **caractérisé en ce qu'**une surface au moins est revêtue selon un procédé de revêtement par poudre.

5. Elément en matériau dérivé du bois selon l'une des revendications 1 à 4, **caractérisé en ce que** la résistance traversante est inférieure à 100 x 10^9 Ohm, de préférence inférieure à 10 x 10^9 Ohm.

6. Panneau de plancher stratifié,
- avec une plaque de support,
- avec une couche de couverture supérieure, et
- avec une couche de contre-traction,
**caractérisé en ce que** la plaque de support consiste en un élément en dérivé du bois selon l'une des revendications 1 à 5.

7. Procédé de réalisation d'un élément en dérivé du bois selon l'une des revendications 1 à 4,
- dans lequel une portion de matériau cellulosique est produite,
- dans lequel une portion de liant est ajoutée au matériau cellulosique, et
- dans lequel le mélange de matériau cellulosique et de liant est comprimé en étant soumis à une pression et à la chaleur,
**caractérisé en ce qu'**une portion de sulfate de potassium est ajoutée au mélange avant la compression.

8. Procédé selon la revendication 7, dans lequel le sulfate de potassium est ajouté au mélange sous la forme d'une solution de préférence aqueuse.

9. Procédé selon revendication 7 ou 8, dans lequel le sulfate est ajouté lors de l'encollage du matériau lignocellulosique ou après celui-ci.

10. Procédé selon l'une des revendications 7 à 9, dans lequel le sulfate de potassium est ajouté au mélange dans une proportion de 0,5 à 15 % en poids, de préférence de 1,5 à 5 % en poids par rapport à la masse sèche du matériau lignocellulosique.

11. Procédé selon l'une des revendications 7 à 10, dans lequel, après la compression, la surface de l'élément en matériau dérivé du bois est revêtue selon un procédé de revêtement par poudre.

12. Procédé selon l'une des revendications 7 à 11, dans lequel, en tant qu'élément en matériau dérivé du bois, est réalisé un panneau en dérivé du bois, en particulier un panneau MDF ou HDF, un panneau de copeaux agglomérés ou un panneau OSB.
